# EUROPEAN PATENT APPLICATION

(11) **EP 4 148 539 A1**
(43) Date of publication of application: **15.03.2023**
(21) Application number: 22194450.7
(22) Date of filing: 07.09.2022
(51) Int. Cl.: G06F 3/01, B60K 35/00, G01C 21/36, G06V 20/58, G06V 20/59, G06V 40/19

(54) **DRIVER VISION ASSISTANCE SYSTEMS AND METHODS**

(30) Priority: 10.09.2021 US 202117471882
(71) Applicant: Aptiv Technologies Limited, St. Michael (BB)
(72) Inventor: Layton, Scott R., Thousand Oaks, CA, 91360 (US); Mangal, Nandita, Los Altos, CA, 94024 (US); Laur, Michael H., Mission Viejo, CA, 92692 (US)
(74) Representative: Manitz Finsterwald Patent- und Rechtsanwaltspartnerschaft mbB

(57) **Abstract**

A driver vision assistance system for a vehicle includes a driver state monitoring system configured to monitor a state of a driver of the vehicle including at least a direction of an eye gaze of the driver, a set of vehicle perception systems configured to detect objects proximate to the vehicle, a driver interface configured to output at least one of visual, audio, and haptic information to the driver, and a controller configured to detect a visual difficulty scenario where the driver is having difficulty reading information external to the vehicle, based on the direction of eye gaze of the driver and using the set of vehicle perception systems, detecting a most-likely object that the driver is targeting and having difficulty reading the relative information, and using the driver interface, output at least one of visual, audio, and haptic information assisting the driver in ascertaining the information.

## Description

### FIELD

The present disclosure generally relates to vehicle advanced driver assistance systems (ADAS) and, more particularly, to driver vision assistance systems and methods.

### BACKGROUND

Occupants of a vehicle (drivers, passengers, etc.) often struggle to read street signs, traffic signs, and/or other features around them while driving. Drivers will often lean in their seat, strain their necks, squint their eyes, blink repeatedly, rub their eyes, adjust eye ware, gesture with arms or hands towards, turn on additional lighting/highbeams, and/or other physical forms of struggling while trying to read the sign, read an address, or identify features (e.g., billboard, advertisement, fire-hydrant, cross-walks, shopping centers, store-fronts, parking-garages) around them. This may cause them to miss a turn while navigating, miss a house or business they are trying to find, or potentially cause an accident. Conventional advanced driver assistance systems (ADAS) perform general driver state monitoring and detect specific conditions such as glare, but these conventional ADAS fail to provide an adequate solution to the problems described above. As a result, there exists an opportunity for improvement in the relevant art.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

According to one aspect of the present disclosure, a driver vision assistance system for a vehicle is presented. In one exemplary implementation, the driver vision assistance system comprises a driver state monitoring system configured to monitor a state of a driver of the vehicle including at least a direction of an eye gaze of the driver, a set of vehicle perception systems configured to detect objects proximate to the vehicle, driver interface configured to output at least one of visual, audio, and haptic information to the driver, and a controller configured to using the driver state monitoring system, detect a visual difficulty scenario where the driver is having difficulty reading information external to the vehicle, based on the direction of eye gaze of the driver and using the set of vehicle perception systems, detecting a most-likely object that the driver is targeting and having difficulty reading the relative information, and using the driver interface, output at least one of visual, audio, and haptic information assisting the driver in ascertaining the information.

In some implementations, the set of vehicle perception systems comprises a front-facing camera of the vehicle configured to capture images in front of the vehicle. In some implementations, the set of vehicle perception systems further comprises a global navigation satellite system (GNSS). In some implementations, the controller is configured to determine the most-likely object from a plurality of objects proximate to the vehicle based on the images captured by the front-facing camera and information obtained from the GNSS system. In some implementations, map information is used to determine the information from the object. In some implementations, vehicle-to-anything (V2X) information is used to determine the information from the object. In some implementations, the detected visual difficulty scenario is the driver leaning in his or her seat. In some implementations, the detected visual difficulty scenario is the driver straining his or her neck. In some implementations, the detected visual difficulty scenario is the driver squinting his or her eyes. In some implementations the detected visual difficulty is the driver pointing to the object or asking the system for clarification of the object and/or what the text associated with the object is.

According to another aspect of the present disclosure, a driver vision assistance method for a vehicle is presented. In one exemplary implementation, the method comprises providing a driver state monitoring system configured to monitor a state of a driver of the vehicle including at least a direction of an eye gaze of the driver, providing a set of vehicle perception systems configured to detect objects proximate to the vehicle, providing a driver interface configured to output at least one of visual, audio, and haptic information to the driver, using the driver state monitoring system, detecting, by a controller of the vehicle, a visual difficulty scenario where the driver is having difficulty reading information external to the vehicle, based on the direction of eye gaze of the driver and using the set of vehicle perception systems, detecting, by the controller, a most-likely object that the driver is targeting and having difficulty reading the relative information, and using the driver interface, outputting, by the controller, at least one of visual, audio, and haptic information assisting the driver in ascertaining the information.

In some implementations, the set of vehicle perception systems comprises a front-facing camera of the vehicle configured to capture images in front of the vehicle. In some implementations, the set of vehicle perception systems further comprises a GNSS. In some implementations, map information is used to determine the information from the object. In some implementations, V2X information is used to determine the information from the object. In some implementations, the detected visual difficulty scenario is the driver leaning in his or her seat. In some implementations, the controller is configured to determine the most-likely object from a plurality of objects proximate to the vehicle based on the images captured by the front-facing camera and information obtained from the GNSS system. In some implementations, the detected visual difficulty scenario is the driver leaning in his or her seat. In some implementations, the detected visual difficulty scenario is the driver straining his or her neck. In some implementations, the detected visual difficulty scenario is the driver squinting his or her eyes. In some implementations the detected visual difficulty is the driver pointing to the object or asking the system for clarification of the object and/or what the text associated with the object is.

According to yet another implementation of the present disclosure, a driver vision assistance system for a vehicle is presented. In one exemplary implementation, the driver vision assistance system comprises a driver state monitoring means for monitoring a state of a driver of the vehicle including at least a direction of an eye gaze of the driver, a set of vehicle perception system means for detecting objects proximate to the vehicle, a driver interface means for outputting at least one of visual, audio, and haptic information to the driver, and a controller means for using the driver state monitoring means, detect a visual difficulty scenario where the driver is having difficulty reading information external to the vehicle, based on the direction of eye gaze of the driver and using the set of vehicle perception system means, detecting a most-likely object that the driver is targeting and having difficulty reading the relative information, and using the driver interface means, output at least one of visual, audio, and haptic information assisting the driver in ascertaining the information.

In some implementations, the set of vehicle perception system means comprises a front-facing camera means of the vehicle for capturing images in front of the vehicle. In some implementations, the set of vehicle perception system means comprises an imaging RADAR or LIDAR means of the vehicle for sensing objects in front of the vehicle. In some implementations, the set of vehicle perception system means further comprises a GNSS means. In some implementations, map information is used to determine the information from the object. In some implementations, V2X information is used to determine the information from the object. In some implementations, the controller means is for determining the most-likely object from a plurality of objects proximate to the vehicle based on the images captured by the front-facing camera means and information obtained from the GNSS means. In some implementations, the detected visual difficulty scenario is at least one of the driver leaning in his or her seat, the driver straining his or her neck, and the driver squinting his or her eyes.

Further areas of applicability of the present disclosure will become apparent from the detailed description provided hereinafter. It should be understood that the detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a functional block diagram of a vehicle having an example driver vision assistance system according to the principles of the present disclosure; and
FIG. 2 is a flow diagram of an example driver vision assistance method according to the principles of the present disclosure.

### DETAILED DESCRIPTION

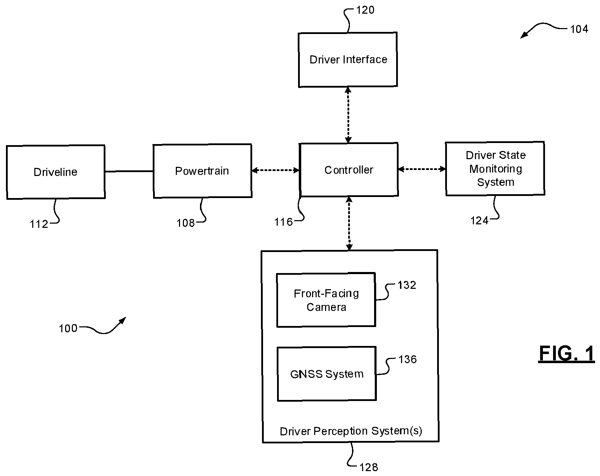

As discussed above, there exists an opportunity for improvement in the art of driver vision assistance. Accordingly, driver vision assistance systems and methods are presented. Referring now to FIG. 1, a functional block diagram of a vehicle 100 having an example driver vision assistance system 104 according to the principles of the present disclosure is illustrated. While the term "driver vision assistance system" is primarily used herein, it will be appreciated that this system 104 is usable by or applicable to any occupant of the vehicle 100 (e.g., passengers). The vehicle 100 generally comprises a powertrain 108 (e.g., an engine, an electric motor, or some combination thereof in addition to a transmission) configured to generate and transfer drive torque to a driveline 112 for vehicle propulsion. A controller 116 controls operation of the vehicle 100, including controlling the powertrain 108 to generate a desired amount of drive torque (e.g., based on driver input via a driver interface 120, such as an accelerator pedal). It will be appreciated that the driver interface 116 includes other suitable components such as visual, audio, and haptic output devices configured to output information to the driver. The controller 116 is also configured to perform at least a portion of the driver vision assistance techniques of the present disclosure, which will now be discussed in greater detail.

The driver vision assistance system 104 comprises the controller 116 and the driver interface 120 in addition to a plurality of other systems. These systems include, but are not necessarily limited to, a driver state monitoring system 124, a set of vehicle perception systems 128. The set of vehicle perception systems 128 further comprises at least a front-facing visual or infrared camera system 132 configured to capture images in front of the vehicle 100 (e.g., including a plurality of objects) and a global navigation satellite system (GNSS) 136 configured to provide location information (coordinates, heading, navigational route, etc.) or a map coordinated with the sensor position of the object. While a front-facing camera and images/objects in front of the vehicle 100 are primarily discussed herein, it will be appreciated that images/objects on the side of the vehicle 100 or towards a rear of the vehicle 100 (e.g., after the vehicle 100 has passed) could also be analyzed and related information thereby relayed to the driver of the vehicle 100. The driver state monitoring system 124 is configured to monitor a state of a driver of the vehicle 100 including at least a direction of an eye gaze of the driver. The controller 116 is configured to utilize the driver state monitoring system 124 to detect a visual difficulty scenario where the driver is having difficulty reading information external to the vehicle 100. Non-limiting examples of the detected visual difficulty scenario include the driver leaning in his or her seat, the driver straining his or her neck, the driver squinting his or her eyes, and various combinations thereof.

Based on the direction of eye gaze of the driver (from the driver state monitoring system 124) and using the set of vehicle perception systems 128, the controller 116 is configured to detect a most-likely object that the driver is targeting and having difficulty reading the relative information. For example, the controller 116 may be configured to determine the most-likely object from a plurality of objects proximate to the vehicle based on the images captured by the front-facing camera 132 and information obtained from the GPS system 136. Other information could also be leveraged, such as a current navigational route of the vehicle 100 (e.g., including a final address) and whether the vehicle 100 is currently operating in a delivery mode or ride-share more. Using the driver interface 120, the controller 116 is configured to output at least one of visual, audio, and haptic information assisting the driver in ascertaining the information. For example, the driver interface 120 could output audio indicating that "That sign says Easy Street."

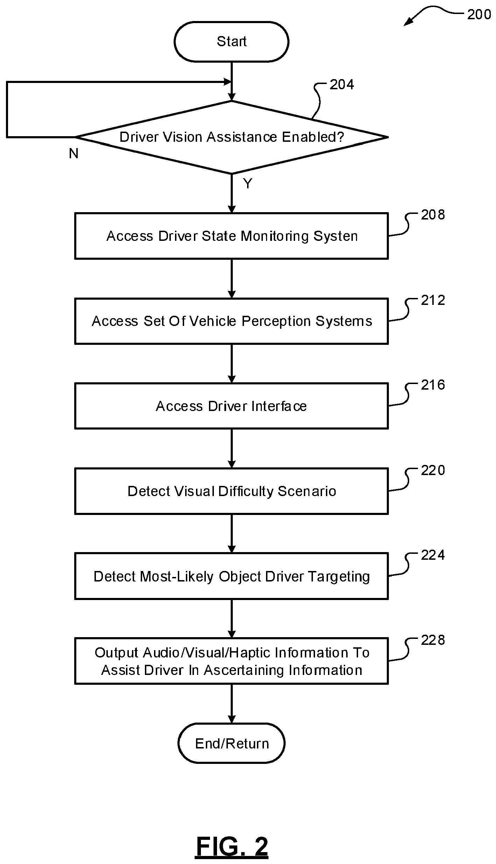

Referring now to FIG. 2, a flow diagram of an example driver vision assistance method 200 according to the principles of the present disclosure is illustrated. While the components of FIG. 1 are specifically reference herein for illustrative purposes, it will be appreciated that this method 200 could be applicable to any suitable vehicle. At 204, the controller 116 determines whether the driver vision assistance feature is enabled. For example, the driver vision assistance feature may be disabled by certain drivers that do not feel they need it. When true, the method 200 ends or returns to 204. Otherwise, the method 200 continues at 208. At 208, the controller 116 accesses the driver state monitoring system 124. At 212, the controller 116 accesses the set of vehicle perception systems 128. At 216, the controller 116 accesses the driver interface 120. At 220, the controller 116, using the driver state monitoring system 124, detects the visual difficulty scenario. At 220, the controller 116, using the direction of eye gaze of the driver (from the driver monitoring system 124) and the set of vehicle perception systems 128 (e.g., the front-facing camera 132 and the GPS system 136) detects a most-likely object that the driver is targeting and having difficulty reading the relative information. At 224, the controller 116, using the driver interface 120, outputs at least one of visual, audio, and haptic information assisting the driver in ascertaining the information. The method 200 then ends or returns to 204 for one or more additional cycles.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known procedures, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The term "and/or" includes any and all combinations of one or more of the associated listed items. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

As used herein, the term module may refer to, be part of, or include: an Application Specific Integrated Circuit (ASIC); an electronic circuit; a combinational logic circuit; a field programmable gate array (FPGA); a processor or a distributed network of processors (shared, dedicated, or grouped) and storage in networked clusters or datacenters that executes code or a process; other suitable components that provide the described functionality; or a combination of some or all of the above, such as in a systemon-chip. The term module may also include memory (shared, dedicated, or grouped) that stores code executed by the one or more processors.

The term code, as used above, may include software, firmware, byte-code and/or microcode, and may refer to programs, routines, functions, classes, and/or objects. The term shared, as used above, means that some or all code from multiple modules may be executed using a single (shared) processor. In addition, some or all code from multiple modules may be stored by a single (shared) memory. The term group, as used above, means that some or all code from a single module may be executed using a group of processors. In addition, some or all code from a single module may be stored using a group of memories.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a general-purpose computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various general-purpose systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein, and any references to specific languages are provided for disclosure of enablement and best mode of the present invention.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A driver vision assistance system for a vehicle, the driver vision assistance system comprising:
a driver state monitoring system configured to monitor a state of a driver of the vehicle including at least a direction of an eye gaze of the driver;
a set of vehicle perception systems configured to detect objects proximate to the vehicle;
a driver interface configured to output at least one of visual, audio, and haptic information to the driver; and
a controller configured to:
using the driver state monitoring system, detect a visual difficulty scenario where the driver is having difficulty reading information external to the vehicle,
based on the direction of eye gaze of the driver and using the set of vehicle perception systems, detecting a most-likely object that the driver is targeting and having difficulty reading the relative information, and
using the driver interface, output at least one of visual, audio, and haptic information assisting the driver in ascertaining the information.

2. The driver vision assistance system of claim 1, wherein the set of vehicle perception systems comprises a front-facing camera of the vehicle configured to capture images in front of the vehicle.

3. The driver vision assistance system of claim 2, wherein the set of vehicle perception systems further comprises localization capability including at least one of a global navigation satellite system (GNSS) based localization, RADAR and/or LIDAR based localization, object-based localization, and other scene semantic-information based localization.

4. The driver vision assistance system of claim 3, wherein the set of vehicle perception systems further comprises map information.

5. The driver vision assistance system of claim 4, wherein the controller is configured to determine the most-likely object from a plurality of objects proximate to the vehicle based on at least one information from set of vehicle perception systems, the map information, and the localization capability information.

6. The driver vision assistance system of claim 1, wherein the detected visual difficulty scenario is the driver leaning in his or her seat.

7. The driver vision assistance system of claim 1, wherein the detected visual difficulty scenario is the driver straining his or her neck.

8. The driver vision assistance system of claim 1, wherein the detected visual difficulty scenario is the driver squinting his or her eyes.

9. A driver vision assistance method for a vehicle, the method comprising:
providing a driver state monitoring system configured to monitor a state of a driver of the vehicle including at least a direction of an eye gaze of the driver;
providing a set of vehicle perception systems configured to detect objects proximate to the vehicle;
providing a driver interface configured to output at least one of visual, audio, and haptic information to the driver;
using the driver state monitoring system, detecting, by a controller of the vehicle, a visual difficulty scenario where the driver is having difficulty reading information external to the vehicle;
based on the direction of eye gaze of the driver and using the set of vehicle perception systems, detecting, by the controller, a most-likely object that the driver is targeting and having difficulty reading the relative information; and
using the driver interface, outputting, by the controller, at least one of visual, audio, and haptic information assisting the driver in ascertaining the information.

10. The method of claim 9, wherein the set of vehicle perception systems comprises a front-facing camera of the vehicle configured to capture images in front of the vehicle.

11. The method of claim 10, wherein the set of vehicle perception systems further comprises localization capability including at least one of a global navigation satellite system (GNSS) based localization, RADAR and/or LIDAR based localization, object-based localization, and other scene semantic information-based localization.

12. The method of claim 11, wherein the set of vehicle perception systems further comprises map information.

13. The method of claim 12, wherein the controller is configured to determine the most-likely object from a plurality of objects proximate to the vehicle based on at least one information from set of vehicle perception systems, the map information, and the localization capability information.

14. The method of claim 9, wherein the detected visual difficulty scenario is the driver leaning in his or her seat.

15. The method of claim 9, wherein the detected visual difficulty scenario is the driver straining his or her neck.

16. The method of claim 9, wherein the detected visual difficulty scenario is the driver squinting his or her eyes.

17. A driver vision assistance system for a vehicle, the driver vision assistance system comprising:
a driver state monitoring means for monitoring a state of a driver of the vehicle including at least a direction of an eye gaze of the driver;
a set of vehicle perception system means for detecting objects proximate to the vehicle;
a driver interface means for outputting at least one of visual, audio, and haptic information to the driver; and
a controller means for:
using the driver state monitoring means, detect a visual difficulty scenario where the driver is having difficulty reading information external to the vehicle,
based on the direction of eye gaze of the driver and using the set of vehicle perception system means, detecting a most-likely object that the driver is targeting and having difficulty reading the relative information, and
using the driver interface means, output at least one of visual, audio, and haptic information assisting the driver in ascertaining the information.

18. The driver vision assistance system of claim 17, wherein the set of vehicle perception system means comprises:
a front-facing camera means of the vehicle for capturing images in front of the vehicle; and
localization capability means including at least one of a global navigation satellite system (GNSS) based localization means, RADAR and/or LIDAR based localization means, object-based localization means, and other scene semantic information-based localization means.

19. The driver vision assistance system of claim 18, wherein the set of vehicle perception system means further comprises map information means.

20. The driver vision assistance system of claim 19, wherein the controller means is for determining the most-likely object from a plurality of objects proximate to the vehicle based on at least one information from set of vehicle perception system means, the map information means, and the localization capability information means.
